# EUROPEAN PATENT SPECIFICATION

(11) **EP 1 985 525 B1**
(45) Date of publication and mention of the grant of the patent: **29.01.2014**
(21) Application number: 08007921.3
(22) Date of filing: 24.04.2008
(51) Int. Cl.: B62D 5/12

(54) **Steering system**
Lenksystem
Système de direction

(30) Priority: 27.04.2007 NL 1033771; 19.07.2007 NL 1034161
(43) Date of publication of application: 29.10.2008
(73) Proprietor: Transport Industry Development Centre B.V., 5692 GA Son en Breugel (NL)
(72) Inventor: Van Genugten, Antonius Jacobus, 5298 VK Liempde (NL)
(74) Representative: Algemeen Octrooi- en Merkenbureau B.V.

(56) References cited:
- EP-A- 1 386 825
- WO-A-86/02611
- DE-A1- 3 209 057
- DE-A1-102004 053 724
- US-A1- 2005 230 177

## Description

The present invention relates to a steering system comprising two wheel bodies arranged beside each other, each wheel body being provided with a steering arm, a frame provided with two at least substantially vertical pivot axes, about which pivot axes the respective wheel bodies are pivotally connected to the frame, at least one cylinder means comprising at least one cylinder housing and at least one piston rod, opposed ends of which at least one piston rod being connected to the respective steering arms for controlling the pivoting of the respective wheel bodies about the associated pivots, and connecting means comprising at least one elongated connecting rod and being arranged for movably connecting said at least one cylinder housing to the frame in such a manner that said cy!inder housing is movable with respect to the frame.

The firm of Tridec offers a steering system, type designation HD-O, which comprises wheels with stub axle steering. The cylinder housing of the cylinder means is rigidly connected to the frame by means of brackets. The ends of the continuous piston rod are connected to the steering arms of the wheel bodies via respective steering rods which extend in line with the piston rod in a neutral position of the steering system. The ends of the piston rod are connected to ends of the steering rod facing towards the piston rod by means of ball and socket joint, which enables omnilateral pivoting of the steering rods relative to the piston rod. At the opposite ends of the steering rods, ball joints are provided for providing a pivoted connection to the steering arms. During steering, which is done by actuating the double-acting cylinder means, the piston rod is moved out of the cylinder housing on one side of the cylinder housing and into the cylinder housing on the opposite side thereof, causing the steering rods to pivot with respect to the piston rod at the location of the respective ball and socket joints. The movement of the piston rod will be further transmitted to the steering arms, and thus to the wheel bodies, via the ball joints, resulting in steering of the associated wheels.

A drawback of this known steering system is the use of the ball and socket joints and the associated steering rods, which make the steering system constructionally complex and expensive. In addition to that, it is usually difficult for constructional reasons to provide the cylinder rod, with the steering rods mounted to the ends thereof, within the installation width that is available.

From WO-A1-8602611 a steering system is known in which a steering cylinder is movably connected to the axle by means of a two-piece, right-angled connecting element.

A steering system as referred to in the introduction is known from DE-A1-32 09 057. By movably connecting the steering cylinder to the axle it is possible to connect the opposite ends of the piston rods directly to the steering arms, thereby eliminating the need to provide steering rods. A drawback of this known steering system, which also applies to the aforesaid HD-O system of Tridec and to the steering unit as disclosed in WO-A1-8602611 for that matter, is the fact that the cylinder housing is loaded in transverse direction during steering. As a result, there is a risk of deformation of the cross-section of the cylinder housing, with the related risks of leakage, wear and play. To prevent or at least reduce these risks, it is necessary to use a robust construction of the cylinder means and/or to repair or exchange the cylinder means at regular intervals.

The object of the invention is in the first place to solve or at least alleviate the aforesaid problem with regard to the occurrence of transverse forces The invention is based on the inventive perception that it is advantageous if each of the at least one connecting rod is pivotally connected, about an associated at least substantially vertically extending first pivot axis, so said at least one cylinder housing at one end and that it is pivotally connected, about an associated at least substantially vertically extending second pivot axis, to the frame at the other end.

By enabling the cylinder housing to move relative to the frame, using such connecting rods, the transverse forces that act on the cylinder housing during steering can be reduced at least to a significant extent. Precisely in order to prevent or at least reduce the bending moments that might act on the connecting rod, the connecting means comprise a number of, preferably two, parallel connecting rods, which are provided in regularly spaced-apart relationship on the circumference of the cylinder housing.

To reduce the mechanical load on said at least once connecting rod as much as possible, it is advantageous if at least one of the pivot axes, and preferably both pivot axes, intersect(s) the central axis of said at least one cylinder means at least in a neutral position of the steering system.

The first pivot axis is furthermore preferably provided at or at least near an end of said at least one cylinder housing, so that the increased stiffness of the cylinder housing at that location is optimally utilised.

The second pivot axis is preferably located at or at least near an opposite end of the cylinder housing. Thus said at least one connecting rod can be provided within the length of the cylinder housing, where sufficient space is as a rule available.

For constructional reasons, said at least one connecting rod preferably has a straight shape, With the central axis of said at least one connecting rod extending parallel to the central axis of a cylinder means, at least in a neutral position of the steering system.

It is furthermore preferable if the connecting means comprise a ring-shaped stiffening member, which engages around a cylinder housing at the location of the first pivot axis, as a result of which the cylinder housing is locally stiffened, as it were, and an overall more robust construction of the cylinder housing is not required.

Although this is not strictly necessary within the framework of the invention, it is preferable from a viewpoint of constructional simplicity if said at least one cylinder means is one cylinder means comprising one cylinder housing with a continuous piston rod, whilst said cylinder means is furthermore preferably of the double-acting type.

The advantages of the present invention are in particular explicitly manifest if the opposite ends of said at least one piston rod are directly connected to the respective steering arms. This obviates the need to use connecting elements, such as steering rods, which are provided, via pivot means such as ball and socket joints, between the piston rod on the one hand and the steering arms of the wheel bodies on the other hand, which has a positive effect on the constructional simplicity and thus the cost price. In fact, the piston rod takes over the function of steering rod. The steering stability can remain ensured in that case.

The connecting means are preferably arranged for limiting the movement of said at least one cylinder housing with respect to the frame in the longitudinal direction of the associated cylinder means. The longitudinal direction as a rule extends transversely to the driving direction of the vehicle in which the steering system according to the invention is used. By limiting the movement of the cylinder housing in said transverse direction, or at least in the longitudinal direction of the cylinder means, the possibility to have the cylinder means in principle function in the known manner is retained.

In a concrete embodiment, the frame may be made up very advantageously of an axle body which extends between the wheel bodies, at the ends of which the respective pivot axes are provided. Such an axle body is usually aiready present in vehicles.

The present invention further relates to a vehicle provided with a steering system according to the invention as described in the foregoing. Such a vehicle may be a self-propelled vehicle or a towed vehicle, and in a preferred embodiment of the invention the steering system may be of the self-steering type, which can be used for making the wheels of the steering system in question self-steering. The vehicle may comprise a number of self-steering axles, whether or not in combination with rigid axles, leading axles and/or trailing axles.

The invention will be explained in more detail hereinafter by means of a description of a number of preferred embodiments of steering systems according to the invention, in which reference is made to the following figures:
Figures 1a-1e are top plan views of a first embodiment of the steering system according to the invention in various steering positions;
Figure 2 is a perspective bottom view of the connecting means and the cylinder means that form part of the steering system of figure 1;
Figure 3 is another perspective view of the connecting means and the cylinder means that form part of the steering system according to figure 1; and
Figures 4a-4c are top plan views of a second preferred embodiment of the steering system according to the invention in various steering positions.

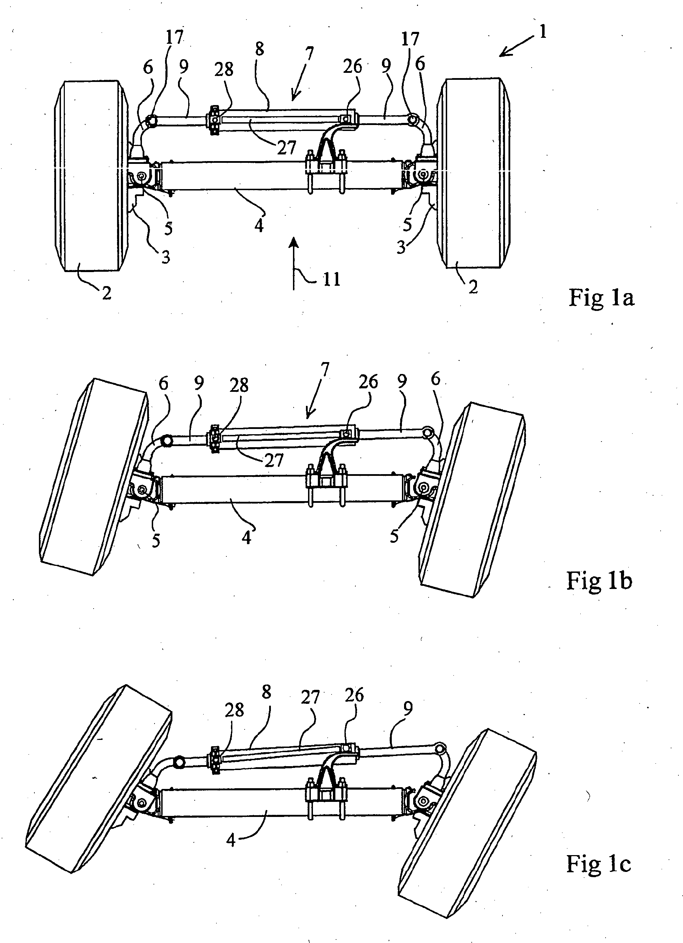

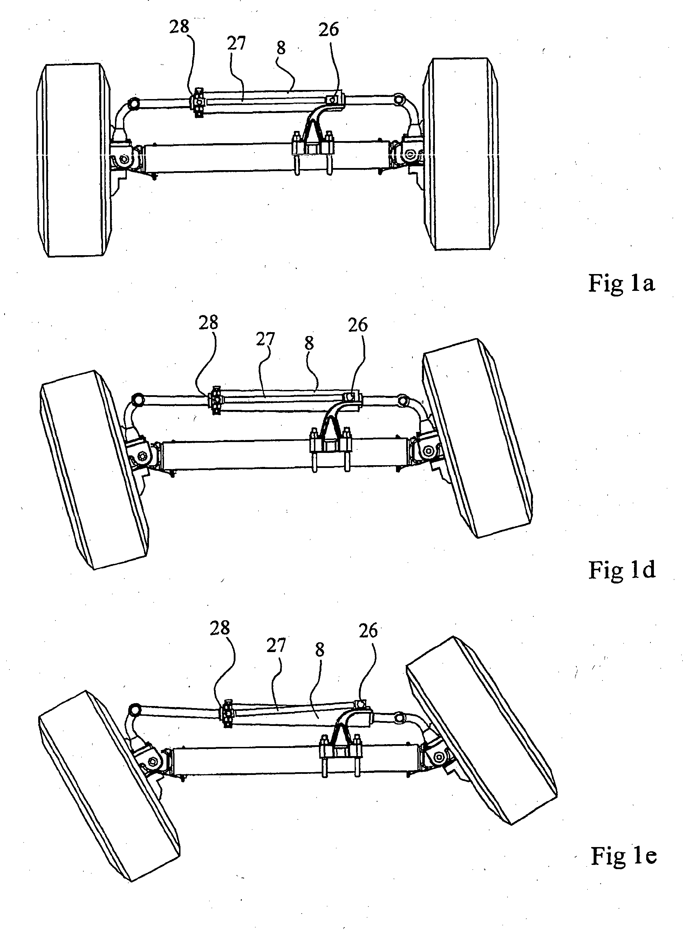

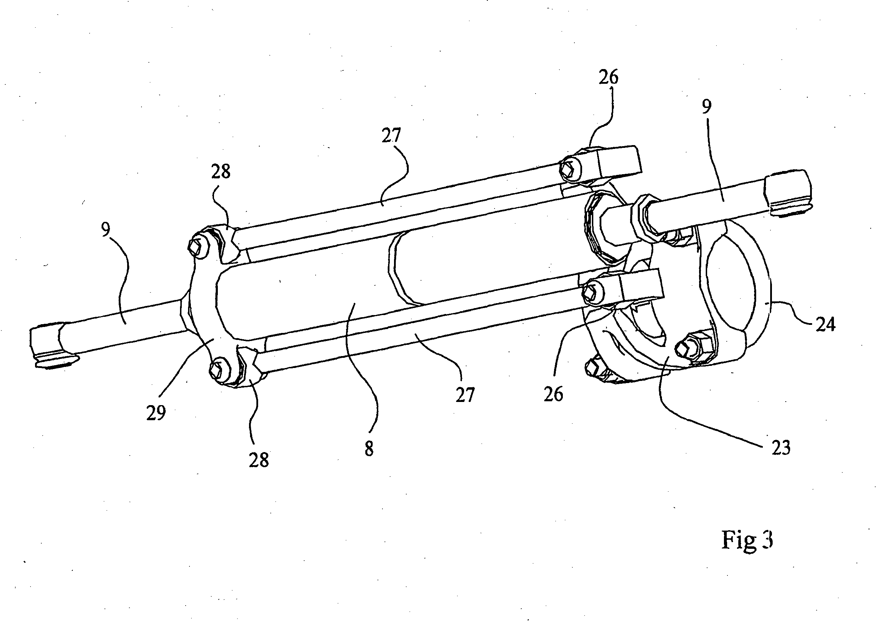

Figures 1-3 show a steering system 1 with associated wheels 2. The steering system 1 comprises an axle housing 4, to the ends of which wheel bodies 3 are pivotally connected about vertical pivots 5 of the ball joint steering knuckle type. In practice, the pivots 5 may also include a small angle with the vertical, for example an angle in the order of 3 degrees.

Each of the wheel bodies 3 is provided with a stub axle, to which the associated wheel 2 is mounted, and a steering arm 6 configured as an arm of the stub axle, which is rigidly connected to the stub axle for joint pivoting about the associated pivot 5.

A hydraulic cylinder means 7 is provided between free ends of the steering arms 6, which are curved slightly towards each other. The cylinder means 7 is of the double-acting type and comprises a cylinder housing 8 and a continuous piston rod 9 which extends from the ends of the cylinder housing 8 on either side and which, as will become apparent hereinafter, actually functions as a steering rod. The ends of the continuous piston rod 9 are pivotally connected to the ends of the steering arms 6 by means of ball joints 17.

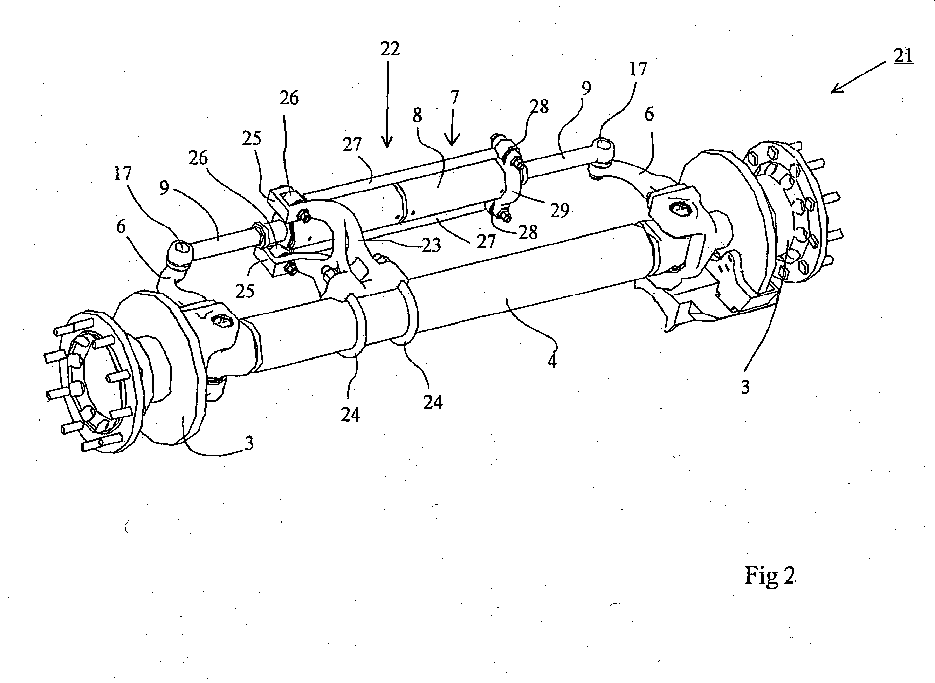

The steering system 1 further comprises connecting means 22 by means of which the cylinder housing 8 is secured to the axle housing 4. The connecting means 22 comprise a base member 23 (see figure 2) which is configured as a steel casting, and which is bolted to the axle body 4 by means of two steel U-shaped brackets 24, whose free ends are provided with screw thread. The base member 23 has two legs 25, which are positioned directly opposite each other above and below an end of the cylinder housing 8. Each of the legs 25 is provided with a pivot member 26, whose pivot axes are vertically oriented, in line with each other, intersecting the central axis of the cylinder housing 8. The connecting means 22 further comprise rectilinear, elongated connecting rods 27, which are each connected to an associated pivot member 26 at one end and to a pivot member 28 at an opposite end. Like the pivot members 26, the pivot members 28 are provided directly opposite each other above and below the cylinder housing 8, with the associated pivot axes for the pivot members 28 being in line and intersecting the central axis of the cylinder housing 8. The pivot members 28 are in turn connected to a ring-shaped stiffening member 29, which clampingly engages the cylinder housing 8 at one end thereof. The pivot members 26 and 28 are configured as silent blocks, in particular consisting of rubber bushes, and allow limited pivoting of the connecting rods 27 with respect to the base member 23 on the one hand and the stiffening member 29 on the other hand, which feature can be put to very good use in steering the wheel bodies 3 by means of the steering system 1.

In figures 1a-1c this is shown for a bend to the right, starting from a neutral position (figure 1 a). Actuation of the cylinder means 7 causes the piston rod 9 to be moved to the right, out of the cylinder housing 8. This movement of the piston rod 9 causes the steering arms 6 to pivot to the right about their associated pivots 5. As a result, the piston rod 9 will take up a non-parallel position relative to the axle body 4, to which position the cylinder housing 8 will conform. The cylinder housing 8 can do so because the connecting rods 27 pivot about the pivot members 26 and 28 to a limited degree at both ends. Said pivot members provide the cylinder housing 8 with the two degrees of freedom required for the movement in question. In particular figure 1c clearly shows how the initial parallel orientation of the connecting rods 27 relative to the cylinder housing 8 is (temporarily) lost.

Figures 1a, 1d and 1e show the behaviour of the steering system 1 during a bend to the left. In this case, too, the cylinder housing 8 is capable of following the movement imposed by the piston rod 9 in that the connecting rods 27 pivot about the pivot members 26, 28 to a certain extent, and also in this case the initial parallel relation between the connecting rods 27 and the cylinder housing 8 is (temporarily) lost (refer in particular to figure 1e).

As a result of the use of the connecting means 22, transverse forces being exerted on the cylinder housing 8 are reduced to a significant extent, whilst in addition it is possible to let the ends of the piston rod 9 directly be pivotally connected to the steering arms 6. As a result, therein is only one pivot point between the pivots 5 and the piston rod 9 at both ends, enabling a simple construction.

The wheels 2 can be steered by means of the steering system 1 by suitably actuating the cylinder means 7, as is known per se. Such actuation of the cylinder means 7 can for example take place on the basis of the steering of the front wheels of the vehicle in which the steering system 1 is used, in which case the transmission between the steering front wheels and the steered wheels associated with the steering system 1 could take place by hydraulic or mechanical means, for example, possibly making use also of electronic control signals. A sensor may for example sense the steering position of the front wheels and an electronic control system may generate control signals on the basis of detections made by said sensor for controlling the cylinder means 7.

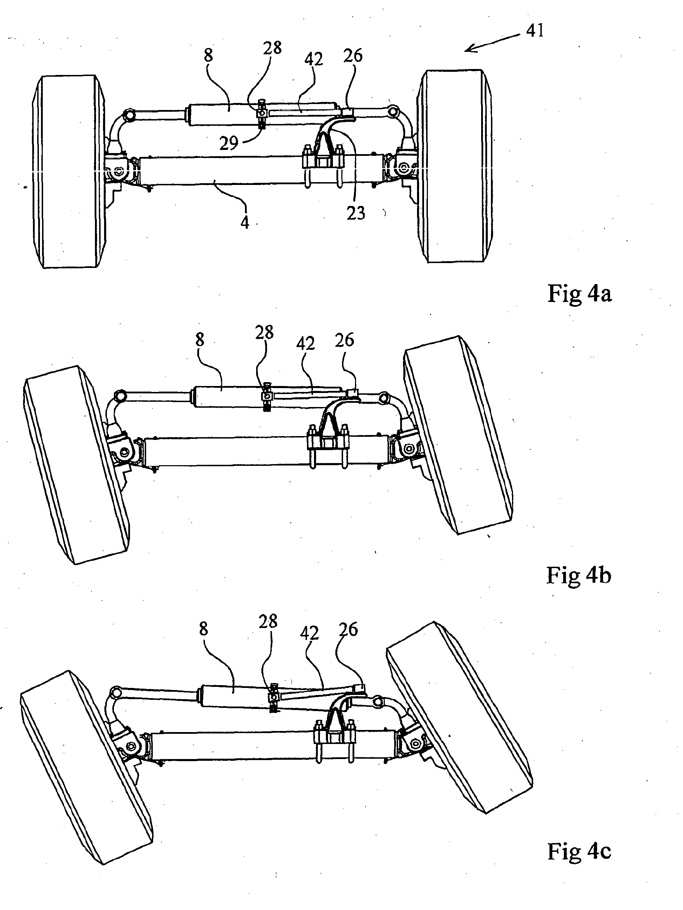

Figures 4a-4c relate to a steering system 41, which is quite similar to the steering system 1. Insofar as the same parts are used in the steering system 41, the same numerals will be used for those parts. In the steering system 41, the base member 23 is positioned slightly further to one end of the axle housing 4, as a result of which the pivot members 26 are located just beyond one end of the cylinder housing 8. In addition to that, the connecting rods 42 which are used are shorter than the connecting rods 27, as a result of which the pivot members 28 and the associated stiffening elements 29 are provided at a position halfway the length of the cylinder housing 8. As is apparent from figures 4a-4c, the operation of the steering system 41 is not significantly different from that of the steering system 1 (compare with figures 1a, 1d and 1e). Because of the smaller length of the connecting rods 42, the connecting rods 42 pivot slightly further during steering.

The above description of various embodiments of the invention is merely given by way of illustration and should by no means be construed as limiting the invention. Thus it is also conceivable within the framework of the present invention to use two cylinder means instead of one double-acting cylinder means, for example, in which case the cylinder housings of said cylinder means are rigidly interconnected, for example, with the central axes of said cylinder housings being in line with each other or extending parallel to each other and the piston rods extending in opposite directions.

## Claims

1. A steering system comprising two wheel bodies (3) arranged beside each other, each wheel body (3) being provided with a steering arm (6), a frame provided with two at least substantially vertical pivot axes (5), about which pivot axes (5) the respective wheel bodies (3) are pivotally connected to the frame, at least one cylinder means (7) comprising at least one cylinder housing (8) and at least one piston rod (9), opposed ends of which at least one piston rod (9) being connected to the respective steering arms (6) for controlling the pivoting of the respective wheel bodies (3) about the associated pivots (5), and connecting means (22) comprising at least one elongated connecting rod (27) and being arranged for movably connecting said at least one cylinder housing (8) to the frame in such a manner that said at least one cylinder housing (8) is movable with respect to the frame, **characterised in that** each of the at least one connecting rod (27) is pivotally connected, about an associated at least substantially vertically extending first pivot axis, to said at least one cylinder housing (8) at one end and that it is pivotally connected about an associated at least substantially vertically extending second pivot axis, to the frame at the other end, and **in that** said connection means (22) comprise a number of parallel connecting rods (27), which parallel connecting rods (27) are provided in regularly spaced-apart relationship on the circumference of a cylinder housing (8).

2. A steering system according to claim 1, **characterised in that** at least one of the first and second pivot axis intersects the central axis of a cylinder means (7) at least in a neutral position of the steering system.

3. A steering system according to claim 2, **characterised in that** both the first and second pivot axis intersects the central axis of a cylinder means (7) at least in the neutral position of the steering system.

4. A steering system according to any one of the preceding claims, **characterised in that** the first pivot axis is provided at or at least near an end of a cylinder housing (8).

5. A steering system according to claim 4, **characterised in that** the second pivot axis is located at or at least near an opposite end of the cylinder housing (8).

6. A steering system according to any one of the preceding claims, **characterised in that** the central axis of said at least one connecting rod (27) extends parallel to the central axis of a cylinder means (7), at least in a neutral position of the steering system.

7. A steering system according to any one of the preceding claims, **characterised in that** the connecting means (22)comprise a ring-shaped stiffening member (29), which engages around a cylinder housing (8) at the location of the first pivot axis.

8. A steering system according to any one of the preceding claims, **characterised in that** said at least one cylinder means (7) is one cylinder means (7) comprising one cylinder housing (8) and a continuous piston rod (9).

9. A steering system according to claim 8, **characterised in that** said cylinder means (7) is of the double-acting type.

10. A steering system according to any one of the preceding claims, **characterised in that** the opposite ends of said at least one piston rod (9) are directly connected to the respective steering arms (6).

11. A steering system according to any one of the preceding claims, **characterised in that** the connecting means (22) are arranged for limiting the movement of said at least one cylinder housing (8) with respect to the frame in the longitudinal direction of the associated cylinder means (7).

12. A steering system according to any one of the preceding claims, **characterised in that** the frame is made up of an axle body (4) which extends between the wheel bodies (3), at the ends of which the respective pivot axes (5) are provided.

13. A vehicle provided with a steering system according to any one of the preceding claims.

## Patentansprüche

1. Lenksystem mit zwei Radkörpern (3), die nebeneinander angeordnet sind, wobei jeder Radkörper (3) mit einem Lenkhebel (6) versehen ist, einem Rahmen, der mit zwei zumindest im Wesentlichen vertikalen Schwenkachsen (5) versehen ist, wobei die jeweiligen Radkörper (3) um die Schwenkachsen (5) schwenkbar mit dem Rahmen verbunden sind, wenigstens einem Zylindermittel (7) mit wenigstens einem Zylindergehäuse (8) und wenigstens einer Kolbenstange (9), wobei entgegengesetzte Enden der wenigstens einen Kolbenstange (9) mit dem jeweiligen Lenkhebel (6) zur Schwenksteuerung des jeweiligen Radkörpers (3) um die dazugehörige Schwenkachse (5) verbunden sind, und Verbindungsmitteln (22), die wenigstens eine langgestreckte Verbindungsstange (27) aufweisen und zur beweglichen Verbindung des wenigstens einen Zylindergehäuses (8) mit dem Rahmen derart angeordnet sind, dass das wenigstens eine Zylindergehäuse (8) relativ zum Rahmen bewegbar ist, **dadurch gekennzeichnet, dass** die wenigstens eine Verbindungsstange (27) jeweils an einem Ende um eine dazugehörige, sich zumindest im Wesentlichen vertikal erstreckende erste Schwenkachse schwenkbar mit dem wenigstens einen Zylindergehäuse (8) verbunden ist und dass sie am anderen Ende um eine dazugehörige, sich zumindest im Wesentlichen vertikal erstreckende zweite Schwenkachse schwenkbar mit dem Rahmen verbunden ist, und dass die Verbindungsmittel (22) mehrere parallele Verbindungsstangen (27) aufweisen, wobei die parallelen Verbindungsstangen (27) regelmäßig beabstandet zueinander auf dem Umfang eines Zylindergehäuses (8) vorgesehen sind.

2. Lenksystem nach Anspruch 1, **dadurch gekennzeichnet, dass** die erste und/oder die zweite Schwenkachse die Mittelachse eines Zylindermittels (7) wenigstens in einer Neutralstellung des Lenksystems schneidet.

3. Lenksystem nach Anspruch 2, **dadurch gekennzeichnet, dass** sowohl die erste als auch die zweite Schwenkachse die Mittelachse eines Zylindermittels (7) wenigstens in der Neutralstellung des Lenksystems schneiden.

4. Lenksystem nach einem der vorhergehenden Ansprüche, **dadurch gekennzeichnet, dass** die erste Schwenkachse an oder zumindest in der Nähe von einem Ende eines Zylindergehäuses (8) vorgesehen ist.

5. Lenksystem nach Anspruch 4, **dadurch gekennzeichnet, dass** die zweite Schwenkachse an oder zumindest in der Nähe von einem entgegengesetzten Ende des Zylindergehäuses (8) angeordnet ist.

6. Lenksystem nach einem der vorhergehenden Ansprüche, **dadurch gekennzeichnet, dass** die Mittelachse der wenigstens einen Verbindungsstange (27) sich zumindest in einer Neutralstellung des Lenksystems parallel zur Mittelachse eines Zylindermittels (7) erstreckt.

7. Lenksystem nach einem der vorhergehenden Ansprüche, **dadurch gekennzeichnet, dass** die Verbindungsmittel (22) ein ringförmiges Versteifungselement (29) aufweisen, das ein Zylindergehäuse (8) am Ort der ersten Drehachse umgreift.

8. Lenksystem nach einem der vorhergehenden Ansprüche, **dadurch gekennzeichnet, dass** das wenigstens eine Zylindermittel (7) ein Zylindermittel (7) ist, das ein Zylindergehäuse (8) und eine durchgehende Kolbenstange (9) aufweist.

9. Lenksystem nach Anspruch 8, **dadurch gekennzeichnet, dass** das Zylindermittel (7) vom doppeltwirkenden Typ ist.

10. Lenksystem nach einem der vorhergehenden Ansprüche, **dadurch gekennzeichnet, dass** die entgegengesetzten Enden der wenigstens einen Kolbenstange (9) direkt mit den entsprechenden Lenkhebeln (6) verbunden sind.

11. Lenksystem nach einem der vorhergehenden Ansprüche, **dadurch gekennzeichnet, dass** die Verbindungsmittel (22) zur Begrenzung der Bewegung des wenigstens einen Zylindergehäuses (8) relativ zum Rahmen in Längsrichtung des dazugehörigen Zylindermittels (7) angeordnet sind.

12. Lenksystem nach einem der vorhergehenden Ansprüche, **dadurch gekennzeichnet, dass** der Rahmen aus einem sich zwischen den Radkörpern (3) erstreckenden Achsschaft (4) gebildet ist, an dessen Enden die entsprechenden Schwenkachsen (5) vorgesehen sind.

13. Fahrzeug, das mit einem Lenksystem nach einem der vorhergehenden Ansprüche versehen ist.

## Revendications

1. Système de direction comprenant deux corps de roue (3) agencés l'un à côté de l'autre, chaque corps de roue (3) étant pourvu d'un bras de direction (6), un cadre pourvu de deux axes pivots au moins sensiblement verticaux (5), les corps de roue (3) respectifs sont reliés au cadre de manière à pouvoir pivoter autour des axes pivots (5), au moins un moyen de cylindre (7) comprenant au moins un boîtier de cylindre (8) et au moins une tige de piston (9), les extrémités opposées de l'au moins une tige de piston (9) étant reliées aux bras de direction respectifs (6) pour commander le pivotement des corps de roue respectifs (3) autour des pivots associés (5), et des moyens de liaison (22) comprenant au moins une bielle allongée (27) et étant agencés pour relier de manière mobile ledit au moins un boîtier de cylindre (8) au cadre de telle manière que ledit au moins un boîtier de cylindre (8) soit mobile par rapport au cadre, **caractérisé en ce que** chacune de l'au moins une bielle (27) est reliée, de manière à pouvoir pivoter autour d'un premier axe pivot associé s'étendant au moins sensiblement verticalement, au dit au moins un boîtier de cylindre (8) à une extrémité et est reliée, de manière à pouvoir pivoter autour d'un deuxième axe pivot associé s'étendant au moins sensiblement verticalement, au cadre à l'autre extrémité, et **en ce que** lesdits moyens de liaison (22) comprennent un nombre de bielles parallèles (27) équidistantes sur la circonférence d'un boîtier de cylindre (8).

2. Système de direction selon la revendication 1, **caractérisé en ce qu'**au moins l'un du premier axe pivot et du deuxième axe pivot est en intersection avec l'axe central d'un moyen de cylindre (7) au moins à une position de point mort du système de direction.

3. Système de direction selon la revendication 2, **caractérisé en ce que** le premier axe pivot et le deuxième axe pivot sont en intersection avec l'axe central d'un moyen de cylindre (7) au moins à la position de point mort du système de direction.

4. Système de direction selon l'une quelconque des revendications précédentes, **caractérisé en ce que** le premier axe pivot est fourni à une extrémité ou au moins à proximité d'une extrémité d'un boîtier de cylindre (8).

5. Système de direction selon la revendication 4, **caractérisé en ce que** le deuxième axe pivot est situé à une extrémité opposée ou au moins à proximité d'une extrémité opposée du boîtier de cylindre (8).

6. Système de direction selon l'une quelconque des revendications précédentes, **caractérisé en ce que** l'axe central de ladite au moins une bielle (27) s'étend parallèlement à l'axe central d'un moyen de cylindre (7) au moins à une position de point mort du système de direction.

7. Système de direction selon l'une quelconque des revendications précédentes, **caractérisé en ce que** le moyen de liaison (22) comprend un organe de raidissement en forme d'anneau (29) qui se met en prise autour d'un boîtier de cylindre (8) à l'emplacement du premier axe pivot.

8. Système de direction selon l'une quelconque des revendications précédentes, **caractérisé en ce que** ledit au moins un moyen de cylindre (7) est un moyen de cylindre (7) comprenant un boîtier de cylindre (8) et une tige de piston continue (9).

9. Système de direction selon la revendication 8, **caractérisé en ce que** ledit moyen de cylindre (7) est de type à double effet.

10. Système de direction selon l'une quelconque des revendications précédentes, **caractérisé en ce que** les extrémités opposées de ladite au moins une tige de piston (9) sont directement reliées aux bras de direction respectifs (6).

11. Système de direction selon l'une quelconque des revendications précédentes, **caractérisé en ce que** les moyens de liaison (22) sont agencés pour limiter le mouvement dudit au moins un boîtier de cylindre (8) par rapport au cadre dans le sens longitudinal du moyen de cylindre associé (7).

12. Système de direction selon l'une quelconque des revendications précédentes, **caractérisé en ce que** le cadre est constitué d'un corps d'essieu (4) qui s'étend entre les corps de roue (3), aux extrémités duquel les axes pivots respectifs (5) sont fournis.

13. Véhicule pourvu d'un système de direction selon l'une quelconque des revendications précédentes.
